# EUROPÄISCHE PATENTANMELDUNG

(11) **EP 1 560 462 A2**
(43) Veröffentlichungstag der Anmeldung: **03.08.2005**
(21) Anmeldenummer: 04025806.3
(22) Anmeldetag: 29.10.2004
(51) Int. Cl.: H05B 6/00

(54) **Induktor mit einem Spulenträger**

(30) Priorität: 06.11.2003 ES 200302668
(71) Anmelder: BSH Bosch und Siemens Hausgeräte GmbH, 81739 München (DE)
(72) Erfinder: Hernandez Blasco, Pablo Jesus, 50017 Zaragoza (ES); Pina Gadea, Carmelo, 50008 Zaragoza (ES)

(57) **Zusammenfassung**

Die vorliegende Erfindung betrifft einen Induktor (6) mit einem Spulenträger (14), der zumindest einen Aufnahmeraum (23) für zumindest ein magnetisches Rückschlussmittel (20, 24) aufweist, sowie ein entsprechendes Verfahren zur Bestückung eines Spulenträgers (14) eines Induktors (6) mit zumindest einem magnetischen Rückschlussmittel (20, 24).

Das Rückschlussmittel (20, 24) ist in dem Aufnahmeraum (23) des Spulenträgers (14) angeordnet, und der Aufnahmeraum (23) ist zur Halterung des Rückschlussmittels (20, 24) ausgebildet.

## Beschreibung

Die vorliegende Erfindung betrifft einen Induktor mit einem Spulenträger, der zumindest einen Aufnahmeraum für zumindest ein magnetisches Rückschlussmittel aufweist, insbesondere für einen Ferritstab, sowie ein entsprechendes Verfahren zur Bestückung eines Spulenträgers eines Induktors mit zumindest einem magnetischen Rückschlussmittel.

Ein derartiger Induktor ist aus DE 196 04 436 A1 bekannt. Dort ist ein Induktor zum Einbau unter eine Muldenplatte beschrieben. Der Induktor weist eine Induktionsspule auf, die auf einem Trägerteil sitzt, und die durch eine thermische und/oder elektrische Isolation abgedeckt ist. Das Trägerteil besitzt an seiner Unterseite Aufnahmebereiche für magnetische Rückschlussmittel. Typischerweise werden in Handarbeit die Rückschlussmittel mit Hilfe von Klebemitteln in den Aufnahmebereichen fixiert.

Der Erfindung liegt die Aufgabe zugrunde, einen Induktor für ein Induktionsgargerät, insbesondere für ein Induktionskochfeld, zur Verfügung zu stellen, der einfach und kostengünstig zu fertigen ist.

Diese Aufgabe wird durch einen Induktor mit den Merkmalen von Anspruch 1 und ein Verfahren zur Bestückung eines Spulenträgers eines Induktors mit zumindest einem magnetischen Rückschlussmittel mit den Merkmalen von Anspruch 7 gelöst.

Der Induktor mit einem Spulenträger weist zumindest einen Aufnahmeraum für zumindest ein magnetisches Rückschlussmittel auf, insbesondere für einen Ferritstab. Das Rückschlussmittel ist in dem Aufnahmeraum des Spulenträgers angeordnet, und der Aufnahmeraum ist zur Halterung des Rückschlussmittels ausgebildet, insbesondere zumindest zum Teil geschlossen. Bei dem Verfahren zur Bestückung des Induktors mit zumindest einem magnetischen Rückschlussmittel, kann zuerst das Rückschlussmittel in dem Aufnahmeraum des Spulenträgers angeordnet und dann der Aufnahmeraum zur Halterung des Rückschlussmittels, beispielsweise durch zumindest teilweises Umspritzen, geschlossen werden. Alternativ kann der Aufnahmeraum auch Rasthaken oder ähnliches zum Haltern des Rückschlussmittels aufweisen. Erfindungsgemäß kann auf ein Einkleben des Rückschlussmittels in den Aufnahmeraum des Spulenträgers verzichtet werden, wodurch die Fertigungskosten deutlich reduziert werden, da ein umständliches Einbringen eines Klebemittels, wie beispielsweise eines Klebestreifens in den Aufnahmeraum entfällt. Darüber hinaus ist das Rückschlussmittel dauerhaft in dem Aufnahmeraum gehalten im Gegensatz zur aufgrund von Alterungsprozessen zeitlich begrenzten Halterung durch Klebemittel. Des weiteren wird es möglich, den Spulenträger umweltfreundlicher zu fertigen, da auf Klebemittel zur Befestigung des Rückschlussmittels in dem Spulenträger verzichtet werden kann.

Gemäß einer bevorzugten Ausführungsform ist vorgesehen, dass der Aufnahmeraum mit zumindest einem Deckel geschlossen wird, insbesondere nachdem das magnetische Rückschlussmittel in den Aufnahmeraum des Spulenträgers eingelegt wurde. Diese Vorgehen hat den Vorteil, dass der Bestückungsprozess des Spulenträgers besonders einfach und schnell durchgeführt werden kann.

Insbesondere weist der Spulenträger mehrere Aufnahmeräume auf, die mit einem gemeinsamen Deckel und/oder mit je einem Deckel geschlossen sind. Bei Verwenden des gemeinsamen Deckels werden alle Aufnahmeräume gleichzeitig in einem Arbeitsschritt geschlossen.

Vorteilhafterweise weist der Deckel und/oder der Spulenträger zumindest ein Rastelement auf, durch welches der Deckel mit dem Spulenträger verrastet ist. Somit kann nach Einlegen des Rückschlussmittels der Aufnahmeraum auf besonders einfach Weise geschlossen werden.

Gemäß einer bevorzugten Ausführungsform ist vorgesehen, dass der Deckel einen Aufnahmeabschnitt aufweist, in welchem das eingelegte Rückschlussmittel gehalten ist. Somit kann bei Bestücken des Spulenträgers das Rückschlussmittel zuerst in den Deckel gelegt und dann der Aufnahmeraum durch den Deckel verschlossen werden, wobei zugleich das Rückschlussmittel in dem Aufnahmeraum angeordnet wird. Dieses Vorgehen hat den Vorteil, dass die Bestückung und das Verschließen des Spulenträgers in einem Arbeitsschritt durchgeführt werden können.

Insbesondere weist der Deckel zumindest einen Montageabschnitt auf, in welchen ein Montagehilfsmittel greift, um das Rückschlussmittel zur Bestückung des Spulenträgers zu fixieren. Somit kann bei dem erfindungsgemäßen Verfahren das Rückschlussmittel vorübergehend durch das Montagehilfsmittel in dem Deckel fixiert werden, das nach dem Bestückungsprozess wieder entfernt wird. Insbesondere wird das Rückschlussmittel in dem Deckel magnetisch fixiert. Auf diese Weise ist es möglich. mehrere Aufnahmeräume für Rückschlussmittel des Spulenträgers in einem Arbeitsschritt zu bestücken und mit zugehörigen Deckeln zu verschließen, da das Montagehilfsmittel mehrere Rückschlussmittel in den entsprechenden Deckeln gleichzeitig halten kann. Somit ist der Bestückungsprozess besonders schnell durchzuführen.

Insbesondere betrifft die Erfindung ein Induktionsgargerät, wie z.B. ein Induktionskochfeld oder einen Herd mit einem Induktionsheizelement.

Die Erfindung und ihre Weiterbildungen werden nachfolgend anhand von Zeichnungen näher erläutert:

Es zeigen
- Fig.1: eine schematische Darstellung eines Induktionskochfeldes mit einer Steuerung zur Regelung der Induktionsheizleistung,
- Fig.2: eine Systemskizze der Steuerung gemäß Figur 1,
- Fig.3: einen schematischen Aufbau eines ersten Ausführungsbeispiels eines Induktors,
- Fig.4: in einer perspektivischen Ansicht von unten ein Spulenträger des Induktors gemäß Figur 3 ohne Deckel,
- Fig.5: in einer perspektivischen Innenansicht einen einzelnen Deckel für einen Aufnahmeraum eines zweiten Ausführungsbeispiels eines Spulenträgers, und
- Fig.6: in einer perspektivischen Ansicht von oben ein Montagehilfsmittel zur Bestückung des Spulenträgers gemäß dem zweiten Ausführungsbeispiel mit mehreren Ferritstäben.

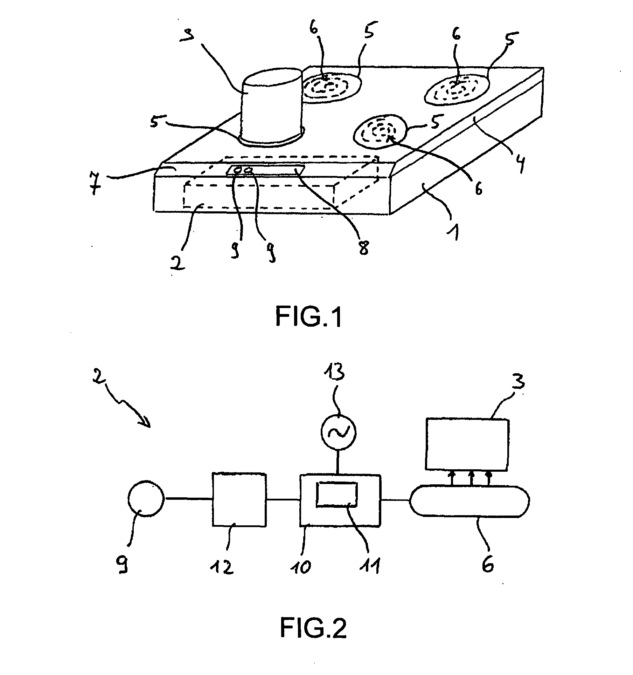

In Figur 1 ist ein Induktionskochfeld 1 mit einer Steuerung 2 zur Regelung einer Induktionsheizleistung und damit zur Regelung der Heizleistung für ein Kochgefäßes 3 gezeigt. Das Induktionskochfeld 1 weist eine Glaskeramikplatte 4 mit vier Induktionskochzonen 5 auf, an deren Position sich unter der Glaskeramikplatte je ein Induktor 6 befindet. Zur Einstellung der Induktionsheizleistung der Induktoren 6 ist an einer Front 7 der Glaskeramikplatte eine Eingabeeinheit 8 angeordnet, die Eingabeelemente 9 zur Einstellung der Induktionsheizleistung sowie Anzeigeelemente aufweist.

Wie in Figur 2 gezeigt, umfasst die Steuerung 2 den Induktor 6 zur induktiven Erwärmung eines Heizelementes 3, wie beispielsweise des Kochgefäßes 3 in Figur 1, einen Leistungsregler 10 zur Regelung einer dem Induktor 6 zugeführten elektrischen Leistung mit einem Wechselrichter 11, ein Eingabeelement 9 zur Einstellung der dem Induktor 6 zugeführten elektrischen Leistung und somit der Induktionsheizleistung und eine Steuereinheit 12, wie z.B. einen Mikroprozessor, zur Steuerung des Leistungsreglers 10. Die Steuerung 2 wird von einer Spannungsquelle 13 mit einer Eingangsspannung versorgt, die eine Wechselspannung ist. Der Wechselrichter 11 des Leistungsreglers 10 wandelt die Eingangsspannung mit einer Eingangsfrequenz von beispielsweise 50 Hz in eine Ausgangsspannung um, die in einem höheren Frequenzbereich liegt, z.B. über 25 kHz.

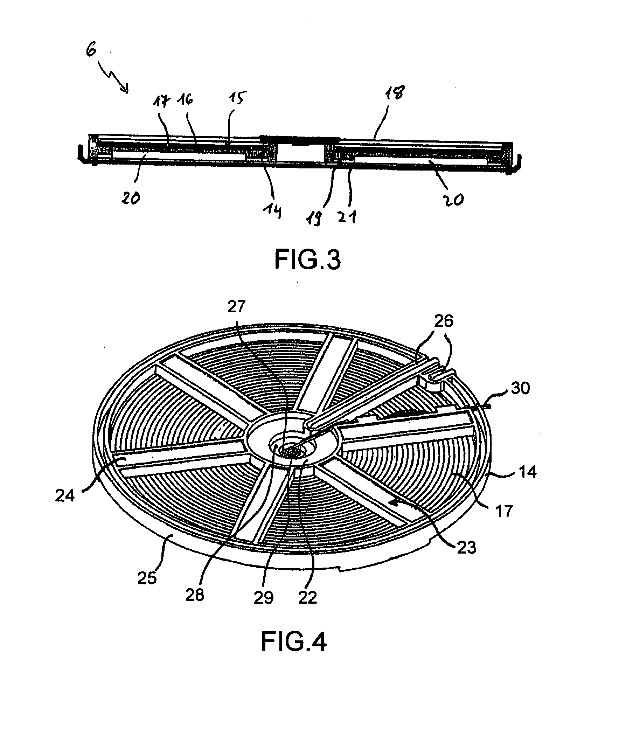

In Figur 3 ist der schematische Aufbau des Induktors 6 gezeigt. Der Induktor 6 weist einen Spulenträger 14 auf, der beispielsweise aus Kunststoff gefertigt ist und an dessen Oberseite 15 eine Nut 16 vorgesehen ist. In der Nut 16, die insbesondere spiralförmig ist, ist eine Induktionsspule 17 angeordnet. Die Induktionsspule 17 ist durch eine Isolationsschicht 18 abgedeckt, die zur thermischen und zur elektrischen Isolation dient. In der Unterseite 19 des Spulenträgers 14 befindet sich Aufnahmeräume 23 für magnetische Rückschlussmittel 20, wie beispielsweise Ferritstäbe. Die Aufnahmeräume werden in diesem ersten Ausführungsbeispiel durch einen gemeinsamen Deckel 21 geschlossen, wodurch die magnetischen Rückschlussmittel 20 in dem Spulenträger 14 gehalten werden.

In Figur 4 ist in einer perspektivischen Ansicht von unten der Spulenträger 14 gemäß Figur 3 ohne Deckel 21 gezeigt. Der Spulenträger 14 ist speichenradförmig beispielsweise aus Kunststoff ausgebildet. Der Spulenträger 14 besitzt einen nabenähnlichen Zentralbereich 22 mit sechs speichenförmig darum herum angeordneten stabförmigen Aufnahmeräumen 23. In die Aufnahmeräume 23 ist jeweils ein Ferritstab 24 als magnetisches Rückschlussmittel eingelegt. Umfangsseitig ist der Spulenträger 14 durch einen radähnlichen Trägerring 25 begrenzt. In dem zwischen dem Zentralbereich 22 und dem Trägerring 25 gebildeten kreisringförmigen Bereich ist die selbsttragende Induktionsspule 17 aus feindrahtiger Litze als Spirale im wesentlichen auf die durch die Oberseite der Aufnahmeräume 23 gebildete Auflagefläche gewickelt. Für die Anschlusspunkte der Induktionsspule 17 im Bereich des Zentralbereiches 22 und des Trägerrings 25 sind zwischen zwei Aufnahmeräumen 23 entsprechende Zuleitungskanäle 26 vorgesehen.

Im Zentrum des nabenähnlichen Zentralbereichs 22 ist eine ebene Wärmeleitplatte 27 eingesetzt. In einem Hohlraum 28 des Zentralbereichs 22 ist unterhalb der Wärmeleitplatte 27 ein Temperaturfühler 29 untergebracht. Der Temperaturfühler 29 dient zur Erfassung der Temperatur an der Glaskeramikplatte 4 (Fig. 1) bzw. der Temperatur des Induktors 6 und zur Steuerung der Abschaltung der dem Induktor 6 zugeführten elektrischen Leistung. Auf diese Weise wird der Induktor 6 bzw. das über dem Induktor 6 auf der Glaskeramikplatte 4 abgestellte Gargefäß 3 vor Überhitzung geschützt. Die elektrischen Anschlussleitungen 30 des Temperaturfühlers 29 sind aus dem Hohlraum 28 zum Rand des Spulenträgers 14 geführt. Der Temperaturfühler 29 kann auch an anderer Stelle angeordnet sein.

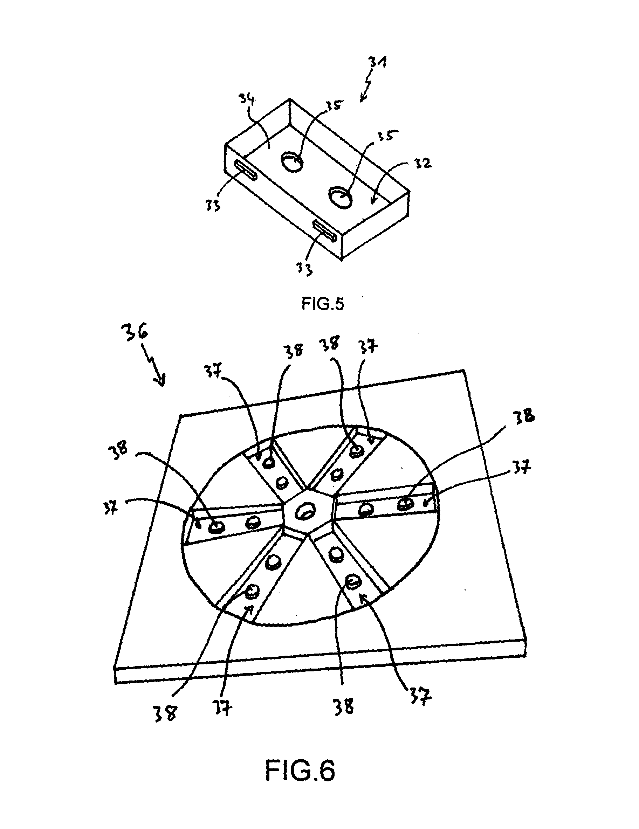

In Figur 5 ist ein einzelner Deckel 31 für einen Aufnahmeraum 23 eines zweiten Ausführungsbeispiels eines Spulenträgers 14 gezeigt, bei dem mehrere Aufnahmeräume 23 mit je einem einzelnen Deckel 31 geschlossen sind. Der Deckel 31 weist einen Aufnahmeabschnitt 32 in Form einer Vertiefung zur Aufnahme des Ferritstabes 24 auf. Des weiteren sind an dem Deckel 31 Rastelemente 33 vorhanden, um den Deckel 31 mit dem Spulenträger 14 zu verrasten. In einer Deckfläche 34 sind in Montageabschnitten 35 Öffnungen vorgesehen, durch die ein Montagehilfsmittel 36 greifen kann, um den Ferritstab 24 zur Bestückung des Spulenträgers 14 in dem Deckel 31 zu fixieren.

In Figur 6 ist ein Montagehilfsmittel 36 zur Bestückung des Spulenträgers 14 gemäß dem zweiten Ausführungsbeispiel mit sechs Ferritstäben 24 gezeigt. Das Montagehilfsmittel 36 weist sechs speichenradförmig angeordnete Vertiefungen 37 auf, in die je ein Deckel 31 mit seiner Deckfläche 34 voran eingelegt werden kann. Dabei greifen Magnete 38 durch die Montageabschnitte 35 des Deckels 31. Wird ein Ferritstab 24 in die Vertiefung 32 des Deckels 31 eingelegt, so wird der Ferritstab 24 durch die Magnete 38 in dem Deckel 31 fixiert. Ist jede der sechs Vertiefungen 37 des Montagehilfsmittels 36 mit je einem Deckel 31 und je einem Ferritstab 24 gefüllt, so kann in einem Arbeitsschritt der Spulenträger 14 mit den Ferritstäben bestückt und die Aufnahmeräume 23 mit den Deckeln 31 verschlossen werden. Dazu wird das Montagehilfsmittel 36 auf die Unterseite 19 des Spulenträgers 14 gepresst. Dabei verrasten die Rastelemente 33 des Deckels 31 mit dem Spulenträger 14, so dass der Deckel 31 fest mit dem Spulenträger 14 verbunden ist und das Montagehilfsmittel 36 von dem Spulenträger 14 entfernt werden kann.

Es ist auch möglich, dass das Montagehilfsmittel 36 für einen Deckel 21 gemäß des ersten Ausführungsbeispiels verwendet werden kann. Dabei wird der Deckel 21 in dem Montagehilfsmittel 36 gehalten und für alle Aufnahmeräume 23 mit Ferritstäben 24 bestückt. Dann wird der Deckel 21 mit Hilfe des Montagehilfsmittels 36 in einem Arbeitsschritt mit dem Spulenträger 14 verrastet.

### Bezugszeichenliste

- 1: Induktionskochfeld
- 2: Steuerung
- 3: Gargefäß
- 4: Glaskeramikplatte
- 5: Induktionskochzone
- 6: Induktor
- 7: Front der Glaskeramikplatte
- 8: Eingabeeinheit
- 9: Eingabeelement
- 10: Leistungsregler
- 11: Wechselrichter
- 12: Steuereinheit
- 13: Spannungsquelle
- 14: Spulenträger
- 15: Oberseite des Spulenträgers
- 16: Nut
- 17: Induktionsspule
- 18: Isolationsschicht
- 19: Unterseite des Spulenträgers
- 20: Magnetische Rückschlussmittel
- 21: Gemeinsamer Deckel
- 22: Nabenähnlicher Zentralbereich
- 23: Aufnahmeraum
- 24: Ferritstab
- 25: Trägerring
- 26: Zuleitungskanal
- 27: Wärmeleitplatte
- 28: Hohlraum des Zentralbereichs
- 29: Temperaturfühler
- 30: Elektrische Anschlussleitungen des Temperaturfühlers
- 31: Deckel
- 32: Aufnahmeabschnitt des Deckels
- 33: Rastelement
- 34: Deckfläche des Deckels
- 35: Montageabschnitt in der Deckfläche des Deckels
- 36: Montagehilfsmittel
- 37: Vertiefungen des Montagehilfsmittels
- 38: Magnete

## Patentansprüche

1. Induktor mit einem Spulenträger (14), der zumindest einen Aufnahmeraum (23) für zumindest ein magnetisches Rückschlussmittel (20, 24) aufweist, **dadurch gekennzeichnet, dass** das Rückschlussmittel (20, 24) in dem Aufnahmeraum (23) des Spulenträgers (14) angeordnet ist, und dass der Aufnahmeraum (23) zur Halterung des Rückschlussmittels (20, 24) ausgebildet ist.

2. Induktor nach Anspruch 1, **dadurch gekennzeichnet, dass** der Aufnahmeraum (23) mit zumindest einem Deckel (21, 31) geschlossen ist.

3. Induktor nach Anspruch 1 oder 2, **dadurch gekennzeichnet, dass** der Spulenträger (14) mehrere Aufnahmeräume (23) aufweist, und dass die Aufnahmeräume mit einem gemeinsamen Deckel (21) und/oder mit je einem Deckel (31) geschlossen sind.

4. Induktor nach Anspruch 2 oder 3, **dadurch gekennzeichnet, dass** der Deckel (21, 31) und/oder der Spulenträger (14) zumindest ein Rastelement (33) zur Verrastung des Deckels (21, 31) mit dem Spulenträger (14) aufweisen.

5. Induktor nach einem der Ansprüche 2 bis 4, **dadurch gekennzeichnet, dass** der Deckel (21, 31) einen Aufnahmeabschnitt (32) aufweist, in welchem das Rückschlussmittel (20, 24) zumindest teilweise aufgenommen ist.

6. Induktor nach einem der Ansprüche 2 bis 5, **dadurch gekennzeichnet, dass** der Deckel (21, 31) zumindest einen Montageabschnitt (35) für ein Montagehilfsmittel (36) aufweist, um das Rückschlussmittel (20, 24) zur Bestückung des Spulenträgers (14) in dem Deckel (21, 31) zu fixieren.

7. Verfahren zur Bestückung eines Spulenträgers (14) eines Induktors (6) mit zumindest einem magnetischen Rückschlussmittel (20, 24), **dadurch gekennzeichnet, dass** das Rückschlussmittel (20, 24) in einem Aufnahmeraum (23) des Spulenträgers (14) angeordnet wird, wobei der Aufnahmeraum (23) zur Halterung des Rückschlussmittels (20, 24) ausgebildet ist.

8. Verfahren nach Anspruch 8, **dadurch gekennzeichnet, dass** der Aufnahmeraum (23) mit zumindest einem Deckel (21, 31) geschlossen wird.

9. Verfahren nach Anspruch 8 oder 9, **dadurch gekennzeichnet, dass** der Spulenträger (14) mehrere Aufnahmeräume (23) aufweist, und dass die Aufnahmeräume durch einen gemeinsamen Deckel (21) und/oder durch je einen Deckel (31) gleichzeitig geschlossen werden.

10. Verfahren nach Anspruch 9 oder 10, **dadurch gekennzeichnet, dass** das Rückschlussmittel (20, 24) in einen Aufnahmeabschnitt (32) des Deckels (21, 31) gelegt wird, dass der Aufnahmeraum (23) durch den Deckel (21, 31) verschlossen wird, und dass dadurch das Rückschlussmittel (20, 24) in dem Aufnahmeraum (23) angeordnet wird.

11. Verfahren nach Anspruch 11, **dadurch gekennzeichnet, dass** beim Verschließen des Aufnahmeraums (23) das Rückschlussmittel (20, 24) durch ein Montagehilfsmittel (36) in dem Deckel (21, 31) fixiert wird.
